(19) Europäisches Patentamt / European Patent Office / Office européen des brevets

(11) **EP 3 706 219 A1**

(12) **EUROPEAN PATENT APPLICATION**
published in accordance with Art. 153(4) EPC

(43) Date of publication:
**09.09.2020 Bulletin 2020/37**

(51) Int Cl.:
*H01M 4/86* (2006.01)    *H01M 4/96* (2006.01)
*H01M 8/10* (2016.01)

(21) Application number: **18874922.0**

(22) Date of filing: **29.10.2018**

(86) International application number:
**PCT/JP2018/040136**

(87) International publication number:
**WO 2019/088027 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2017  JP 2017210653**

(71) Applicant: **Toppan Printing Co., Ltd.**
**Tokyo 110-0016 (JP)**

(72) Inventor: **KAWAMURA Atsuhiro**
**Tokyo 110-0016 (JP)**

(74) Representative: **Hoffmann Eitle**
**Patent- und Rechtsanwälte PartmbB**
**Arabellastraße 30**
**81925 München (DE)**

(54) **ELECTRODE CATALYST LAYER, MEMBRANE-ELECTRODE ASSEMBLY AND METHOD FOR PRODUCING ELECTRODE CATALYST LAYER**

(57)    There is provided an electrode catalyst layer that is greatly improved in power generation performance under low-humidity conditions and high-humidity conditions, a membrane-electrode assembly including the electrode catalyst layer, and a method for producing the electrode catalyst layer. The electrode catalyst layer according to the present embodiment has platinum particles as a catalyst, further includes carbon particles, fibrous substances, and polymer electrolyte, and is a single layer. The electrode catalyst layer satisfies the following equation (1) where D/W represents the ratio of a thickness D and a platinum support amount W of the electrode catalyst layer, C represents the ratio of mass of the carbon particles to mass of the electrode catalyst layer, and F represents a ratio of mass of the fibrous substances to the mass of the electrode catalyst layer.

$$6.0 > (C + F)\cdot(D/W) \geq 1.0 \ [cm^3/g] \ ... \ (1)$$

FIG.1

**Description**

[Technical Field]

The present invention relates to an electrode catalyst layer for a polymer electrolyte fuel cell, a membrane-electrode assembly including the electrode catalyst layer, and a method for producing the electrode catalyst layer.

[Background Art]

In recent years, there has been a demand for development of novel motive power sources allowing $CO_2$ reduction in order to solve environmental problems such as global warming. As one of such motive power sources, fuel cells not emitting $CO_2$ have been attracting attention. A fuel cell oxidizes a fuel (e.g., hydrogen) using an oxidizer (e.g., oxygen) to generate harmless water. The fuel cell then converts chemical energy obtained by the generation of water into electric energy that is to be used as a motive power source or an electric power source.

Fuel cells are classified according to the kind of electrolyte and greatly depend on the operating temperature. Suitable fuel cells are used according to the temperature range in which a fuel cell-installed apparatus operates. Among those fuel cells, a polymer electrolyte fuel cell (PEFC) has been developed as a power source for domestic use and a power source for automobiles because it operates at low temperatures, has a high-power density, and is capable of miniaturization and weight saving.

The polymer electrolyte fuel cell (PEFC) has a structure (membrane-electrode assembly) in which a polymer electrolyte membrane is sandwiched between a fuel electrode (anode) and an air electrode (cathode), and supplies hydrogen as a fuel gas to the fuel electrode and supplies an air gas including oxygen to the air electrode to generate electric power by electrochemical reaction as follows.

$$\text{Anode: } H_2 \rightarrow 2H^+ + 2e^- \ldots \qquad \text{(reaction 1)}$$

$$\text{Cathode: } 1/2\, O_2 + 2H^+ + 2e^- \rightarrow H_2O \ldots \qquad \text{(reaction 2)}$$

The anode and the cathode are each formed of a laminated structure of electrode catalyst layers and gas diffusion layers. The polymer electrolyte fuel cell (PEFC) generates protons and electrons by an electrode catalyst from the hydrogen supplied to the anode-side electrode catalyst layer (reaction 1). The protons pass through the polymer electrolyte in the anode-side electrode catalyst layer and the polymer electrolyte membrane, and proceed to the cathode. The electrons pass through an external circuit and proceed to the cathode. In the cathode-side electrode catalyst layer, the protons, the electrons, and the oxygen contained in the air supplied from outside react to generate water (reaction 2).

To reduce the cost of fuel cells, effort has been focused on the development of fuel cells with high output characteristics. However, high-output operation excessively generates water and causes a phenomenon of impeding gas supply to the electrode catalyst layer and the gas diffusion layer (flooding), thereby resulting in reduction of power generation performance.

To solve the above-mentioned problem, PTL 1 and PTL 2 each propose electrode catalyst layers containing not only a carbon-supported platinum but also carbon fibers.

[Citation List]

[Patent Literatures]

    [PTL 1] JP H10-241703 A
    [PTL 2] JP 5537178 B

[Summary of the Invention]

[Technical Problem]

According to PTL 1 and PTL 2, it is estimated that including carbon fibers in electrode catalyst layers creates voids in the electrode catalyst layers to improve drainage. However, PTL 1 and PTL 2 each specify the structure and content of the carbon fibers but do not clearly show the structure of the electrode catalyst layers with high power generation performance.

The present invention has been made in view of the circumstances stated above, and has an object of providing an electrode catalyst layer that is greatly improved in power generation performance under low-humidity conditions and high-humidity conditions, a membrane-electrode assembly including the electrode catalyst layer, and a method for producing the electrode catalyst layer.

[Solution to Problem]

To solve the problem, an aspect of the present invention is an electrode catalyst layer for a polymer electrolyte fuel cell including catalyst particles, conductive carriers, fibrous substances, and a polymer electrolyte. The electrode catalyst layer is a single layer that satisfies the following equation (1) where D/W represents the ratio between a thickness D and a supported catalyst amount W of the electrode catalyst layer, C represents the ratio of mass of the conductive carriers to mass of the electrode catalyst layer, and F represents the ratio of mass of the fibrous substances to the mass of the electrode catalyst layer.

$$6.0 > (C + F) \cdot (D/W) \geq 1.0 \ [cm^3/g] \ ... \ (1)$$

[Advantageous Effects of Invention]

According to an aspect of the present invention, it is possible to provide a polymer electrolyte fuel cell having improved drainage properties and gas diffusion properties and provides high power generation performance.

[Brief Description of the Drawings]

Fig. 1 is a schematic view of an electrode catalyst layer for a polymer electrolyte fuel cell according to an embodiment of the present invention.
Fig. 2 is a diagram describing a configuration of a membrane-electrode assembly according to the embodiment of the present invention.

[Description of Embodiments]

With reference to the drawings, an embodiment of the present invention will be described.
It should be noted that the present invention is not limited to the following embodiment. Design modifications may be made on the basis of the knowledge of the person skilled in the art, and such modifications are also included in the scope of embodiments of the present invention.
An electrode catalyst layer of a polymer electrolyte fuel cell according to the present embodiment includes catalyst particles 1, conductive carriers 2, fibrous substances 4, and a polymer electrolyte 3. The electrode catalyst layer is a single layer that is used for both anode and cathode of the polymer electrolyte fuel cell, for example. The electrode catalyst layer satisfies the following equation (1) where D/W represents the ratio between a thickness D and a supported catalyst amount W of the electrode catalyst layer, C represents the ratio of mass of the conductive carriers 2 to mass of the electrode catalyst layer, and F represents the ratio of mass of the fibrous substances 4 to the mass of the electrode catalyst layer.

$$6.0 > (C + F) \cdot (D/W) \geq 1.0 \ [cm^3/g] \ ... \ (1)$$

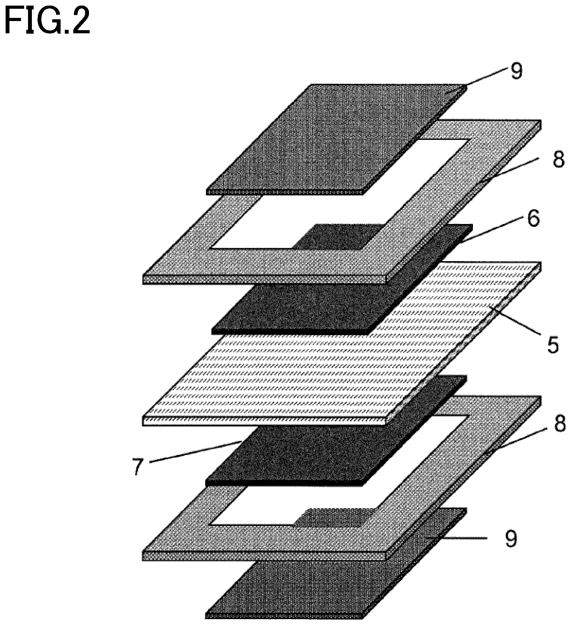

A membrane-electrode assembly according to the present embodiment includes, as illustrated in Fig. 2, a polymer electrolyte membrane 5, a cathode electrode catalyst layer 6, an anode electrode catalyst layer 7, gasket materials 8, and gas diffusion layers 9.

<Electrode catalyst layer>

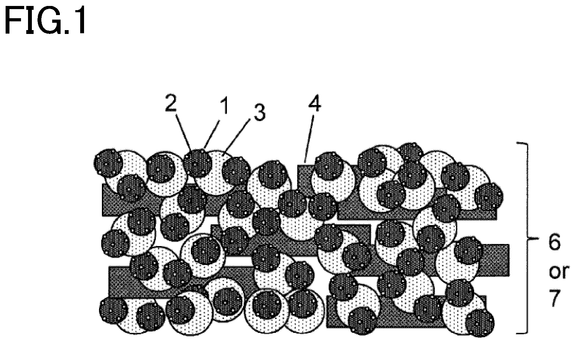

Next, with reference to Fig. 1, a configuration of the electrode catalyst layer according to the present embodiment will be described.
Examples of the catalyst particles 1 that may be used in the present embodiment include platinum group elements, metals, or alloys, oxides, and multiple oxides of these substances. Examples of the platinum group elements include platinum, palladium, ruthenium, iridium, rhodium, and osmium. Examples of the metals may be iron, lead, copper, chromium, cobalt, nickel, manganese, vanadium, molybdenum, gallium, aluminum.

The diameter of the catalyst particles 1 is, for example, in the range of 0.1 nm or more and 1 $\mu$m or less, preferably in the range of 0.5 nm or more and 100 nm or less, further preferably in the range of 1 nm or more and 10 nm or less.

The conductive carriers 2 supporting the catalyst particles 1 may be carbon particles, for example. The kind of the carbon particles may be any as long as they are fine-grained and electrically conductive and are not affected by the catalyst particles 1. Examples of the kind of the carbon particles include carbon black, graphite, black lead, activated charcoal, and fullerene.

Hereinafter, the carbon particles (the conductive carriers 2) supporting the catalyst particles 1 described above will be collectively called a carbon-supported catalyst. The mass ratio of the catalyst particles 1 to the carbon-supported catalyst is preferably in the range of 20% or more and 70% or less. When the mass ratio of the catalyst particles 1 to the carbon-supported catalyst is less than 20%, the electrode catalyst layer may decrease in reactivity and power generation performance may significantly deteriorate. When the mass ratio of the catalyst particles 1 to the carbon-supported catalyst exceeds 70%, the cohesive properties of the conductive carriers 2 may increase during liquid preparation, and the contact area between the conductive carriers 2 and the polymer electrolyte 3 may decrease and power generation performance may deteriorate.

The polymer electrolyte 3 used in the present embodiment may be made from the same material as the polymer electrolyte membrane 5 as long as the material has proton conductivity. Examples of the polymer electrolyte 3 include fluorine-based polymer electrolyte and hydrocarbon-based polymer electrolyte. The fluorine-based polymer electrolyte may be a Nafion (registered trademark) -type material or the like produced by Du Pont.

When the ratio of the mass of the conductive carriers 2 to the mass of the electrode catalyst layer is designated as C and the ratio of the mass of the fibrous substances 4 to the mass of the electrode catalyst layer is designated as F, the ratio (I/(C + F) of mass I of the polymer electrolyte 3 to the mass ratios C + F is preferably in the range of 0.2 or more and 1.5 or less.

When I/(C + F) is less than 0.2, the proton path may become poor and power generation performance may significantly deteriorate. When I/(C + F) exceeds 1.5, drainage of the electrode catalyst layer may decrease and power generation performance of the fuel cell may significantly deteriorate.

The mass of the electrode catalyst layer refers to the total value of masses of the catalyst particles 1, the conductive carriers 2, the fibrous substances 4, and the polymer electrolyte 3 contained in the electrode catalyst layer formed on one surface of the polymer electrolyte membrane 5.

The fibrous substances 4 used in the present embodiment may be conductive fibers. Examples of the conductive fibers include carbon fibers, carbon nanofibers and carbon nanotubes. The fibrous substances 4 are preferably carbon nanofibers and carbon nanotubes, for example, in terms of electrical conductivity and dispersibility. Specifically, the fibrous substances 4 may be VGCF (registered trademark) or the like produced by Showa Denko K.K.. In this way, the fibrous substances 4 may contain carbon, like the carbon particles used as the conductive carriers 2. The fibrous substances 4 containing carbon have electrical conductivity, like the carbon particles (the conductive carriers 2). As a result, the fibrous substances 4 and the carbon particles (the conductive carriers 2) are considered to produce equivalent working effects in regard to electrical conductivity.

Alternatively, the fibrous substances 4 may be electrolyte fibers obtained by processing polymer electrolyte in fibrous form. The use of the electrolyte fibers improves proton conductivity. Further, only one kind of these fibrous substances may be singly used, or two or more kinds of these fibrous substances may be used in combination. Conductive fibers and electrolyte fibers may be used together.

The fiber diameter of the fibrous substances 4 is preferably in the range of 0.5 nm or more and 500 nm or less, and more preferably in the range of 10 nm or more and 300 nm or less, for example. Setting the fiber diameter within the above-described range makes it possible to increase voids in the electrode catalyst layer and provide high power generation performance. The fiber length of the fibrous substances 4 is preferably in the range of 1 $\mu$m or more and 200 $\mu$m or less, and more preferably in the range of 1 $\mu$m or more and 50 $\mu$m or less, for example. Setting the fiber length within the above-described range makes it possible to increase the strength of the electrode catalyst layer and reduce the occurrence of cracks during formation. In addition, it is possible to increase voids in the electrode catalyst layer and provide high power generation performance.

<Membrane-electrode assembly>

Next, with reference to Fig. 2, a configuration of the membrane-electrode assembly according to the present embodiment will be described.

The polymer electrolyte membrane 5 used in the membrane-electrode assembly according to the present embodiment may be any membrane as long as it has proton conductivity. Examples of the polymer electrolyte membrane 5 include a fluorine-based polymer electrolyte membrane, and a hydrocarbon-based polymer electrolyte membrane. The fluorine-based polymer electrolyte membrane may be Nafion (registered trademark) or the like produced by Du Pont. The hydrocarbon-based polymer electrolyte membrane may be an electrolyte membrane made from sulfonated polyether ketone, sulfonated polyether sulfone, sulfonated polyether ether sulfone, sulfonated polysulfide, sulfonated polyphenylene, or the like, for example. Among them, as the polymer electrolyte membrane 5, a material including perfluorosulfonic acid can be suitably used for the fluorine-based polymer electrolyte.

The gasket material 8 and a plastic film having and an adhesive layer may be heat resistant to such an extent that they do not melt under thermal pressurization. For example, the plastic film may be a polymer film made from polyethylene naphthalate, polyethylene terephthalate, polyimide, polyamide of parabanic acid, polyamide (nylon (registered trademark)), polysulfone, polyethersulfone, polyethersulfone, polyphenylene sulfide, polyether ether ketone, polyether imide, polyacrylate, or the like. In addition, the plastic film can be made from a heat-resistant fluororesin such as ethylene tetrafluoroethylene copolymer, tetrafluoroethylene-hexafluoropropylene copolymer, tetrafluoroperfluoroalkyl vinyl ether copolymer, and polytetrafluoroethylene. The base material for the gasket material 8 is preferably polyethylene-naphthalate in particular, in consideration of gas barrier properties and heat resistance properties.

The gasket material 8 and the plastic film having the adhesive layer may be made of an acryl-, urethane-, silicone-, or rubber-based adhesive. More preferably, the adhesive layer is made of an acryl-based adhesive in consideration of the adhesion between the gasket material 8 and the polymer electrolyte membrane 5, and heat resistance under thermal pressurization. As for the adhesion between the gasket material 8 and the plastic film having the adhesive layer, the adhesion force between the polymer electrolyte membrane 5 and the gasket material 8 is preferably greater than the adhesion force between the gasket material 8 and the plastic film having the adhesive layer, because the gasket material 8 could be easily added to the membrane-electrode assembly.

<Production method>

Next, methods for producing the electrode catalyst layer and the membrane-electrode assembly according to the present embodiment will be described.

For example, the electrode catalyst layer is produced by, dispersing the catalyst particles 1, the conductive carriers 2, the fibrous substances 4, and the polymer electrolyte 3 in a solvent to produce a catalyst ink, applying the catalyst ink to a base material, and drying the catalyst ink.

There is no particular limitation on the solvent used as the dispersion medium of the catalyst ink as long as the solvent does not erode the conductive carriers 2 supporting the catalyst particles 1, the polymer electrolyte 3, and the fibrous substances 4 and is capable of dissolving the polymer electrolyte 3 in a highly fluid state or dispersing the polymer electrolyte 3 as fine gel.

The solvent desirably contains a volatile organic solvent and water. Although there is no particular limitation, examples of the organic solvent include alcohols such as methanol, ethanol, 1-propanol, 2-propanol, 1-butanol, 2-butanol, isobutyl alcohol, tert-butyl alcohol, and pentanol, ketone-type solvents such as acetone, methylethyl ketone, pentanone, methylisobutylketone, heptanone, cyclohexanone, methylcyclohexanone, acetonyl-acetone, and diisobutyl ketone, ether-type solvents such as tetrahydrofuran, dioxane, diethylene glycol dimethylether, anisole, methoxytoluene, and dibutylether, and polar solvents such as other dimethylformamide, dimethylacetamide, N-methylpyrrolidone, ethylene glycol, diethylene glycol, diacetone alcohol, and 1-methoxy-2-propanol. A mixture of two or more of these solvents and water may be used, too. The solvent may contain a dispersing agent.

The dispersion process for producing the catalyst ink can be performed using various apparatuses. Examples of the dispersion process include a process with a ball mill or a roll mill, a process with a shear mill, a process with a wet mill and an ultrasonic dispersion process. Alternatively, the dispersion process may be conducted using a homogenizer to perform agitation by centrifugal force.

Examples of a coating method for forming the catalyst ink on the applying base material include a die coater method, a roll coater method and a spray method. Among them, the die coater method is preferred. The die coater method is also applicable to intermittent coating due to its characteristics in stabilizing the film thickness of the coated middle part.

The base material on which the electrode catalyst layer is formed is, for example, the polymer electrolyte membrane 5 and the transfer base material. However, there is no particular limitation on the base material in the present embodiment.

When producing the membrane-electrode assembly by the transfer method, the transfer base material may be made of any material as long as the electrode catalyst layer can be formed on the surface thereof and the electrode catalyst layer can be transferred to the polymer electrolyte membrane 5. Examples of the transfer base material include base materials made from polymer films and a heat-resistant fluororesin. Examples of the polymer film include polyimide, polyethylene terephthalate, polyamide of parabanic acid, polyamide (nylon), polysulfone, polyethersulfone, polyethersulfone, polyphenylene sulfide, polyether ether ketone, polyether imide, polyacrylate, and polyethylene-naphthalate. In addition, examples of the heat-resistant fluororesin include ethylene tetrafluoroethylene copolymer, tetrafluoroethylene-hexafluoropropylene copolymer, tetrafluoroperfluoroalkyl vinyl ether copolymer, and polytetrafluoroethylene.

To produce at least one of the electrode catalyst layers constituting the membrane-electrode assembly, the electrode catalyst layer is desirably produced such that $(C + F) \cdot (D/W)$ is 1.0 cm$^3$/g or more and less than 6.0 cm$^3$/g where D/W represents the ratio between the thickness D and the supported catalyst amount W of the electrode catalyst layer, C represents the ratio of the mass of the conductive carriers 2 (e.g., carbon particles) to the mass of the electrode catalyst layer, and F represents the ratio of the mass of the fibrous substances 4 to the mass of the electrode catalyst layer. More preferably, $(C + F) \cdot (D/W)$ is 1.0 cm$^3$/g or more and 5.0 cm$^3$/g or less. When $(C + F) \cdot (D/W)$ is less than 1.0 cm$^3$/g, the thickness D of the electrode catalyst layer becomes small which makes the structure of the electrode catalyst layer dense and may lead to deterioration of the power generation performance. When $(C + F) \cdot (D/W)$ is equal to or greater than 6.0 cm$^3$/g, the thickness D of the electrode catalyst layer becomes large which increases the mass transfer resistance and may lead to deterioration of the power generation performance.

The thickness D of the electrode catalyst layer is measured by, for example, cutting out the electrode catalyst layer and observing the cross section of the electrode catalyst layer under a scanning electron microscope (SEM). The thickness of the electrode catalyst layer is defined as the distance from the interface between the electrode catalyst layer and the polymer electrolyte membrane 5 to the surface opposite to that in contact with the polymer electrolyte membrane 5, that is, the surface of the electrode catalyst layer. The thickness of the electrode catalyst layer is randomly measured at ten points in the cross-section image obtained by the SEM, and the average of the measured values is defined as the thickness D of the electrode catalyst layer.

The supported catalyst amount W of the electrode catalyst layer refers to the ratio of content of the catalyst particles 1 to the volume of one electrode catalyst layer constituting the membrane-electrode assembly. The supported catalyst amount W, the mass ratio C of the conductive carriers 2 (carbon particles), and the mass ratio F of the fibrous substances can be calculated using respective general measurement methods. Examples of the measurement methods include a method for ionizing elements by ICP mass spectrometry (ICPMASS) and a method for mass spectrometry by atomic absorption spectrometry.

The membrane-electrode assembly as one of the present embodiments becomes a membrane-electrode assembly with power generation performance enhanced by providing the electrode catalyst layer configured as described above on at least one of the anode and the cathode, especially on the cathode. The electrode catalyst layer configured as described above is preferably used on both the anode and the cathode. Each of the anode and the cathode may be a single layer.

According to the method for producing a membrane-electrode assembly described above, it is possible to produce the membrane-electrode assembly in which the electrode catalyst layer is favorably joined to the both surfaces of the polymer electrolyte membrane 5.

[Examples]

Hereinafter, specific examples of the present invention will be described. However, the present invention is not limited to these examples.

(Preparation of the catalyst ink)

A catalyst ink for forming an electrode catalyst layer is formed from a fluorine-based polymer electrolyte (Nafion)-dispersed solution, a carbon-supported platinum, fibrous substances (fiber diameter: 150 nm, fiber length: 6 μm), 1-propanol, and water. These materials were dispersed by a ball mill for 60 minutes to prepare the catalyst ink for electrode catalyst layer. The content ratios of the carbon-supported platinum, fibrous substances, and a fluorine-based polymer electrolyte will be described later.

(Formation of the electrode catalyst layer and production of the membrane-electrode assembly)

The base material (the polymer electrolyte membrane 5) was die-coated with the prepared catalyst ink and was dried until the tack disappeared on a suction plate of 100°C to form the cathode electrode catalyst layer. The anode electrode catalyst layer was formed in a similar manner to produce the membrane-electrode assembly.

(Power generation evaluation)

Carbon paper sheets having the function of the gas diffusion layer 9 were stuck together in such a manner as to sandwich the membrane-electrode assemblies produced according to the examples and comparative examples, and the samples were installed in a power generation evaluation cell. The samples were subjected to current/voltage measurement by a fuel cell measurement device at a cell temperature of 80°C. Flow amount control was performed at a constant utilization rate using hydrogen as a fuel gas and using air as an oxidizing gas.

(Evaluation of thicknesses by cross-section SEM)

The cathode electrode catalyst layers and the anode electrode catalyst layers were cut out from the membrane-electrode assemblies produced according to the examples and the comparative examples, and cross-section observation was performed by a scanning electron microscope (SEM) and their respective thicknesses was determined.

[Example 1]

In Example 1, a carbon-supported platinum (TEC10E50E) and fibrous substances (fiber diameter: 150 nm, fiber length: 6 $\mu$m) were used to prepare the catalyst ink such that the total value (C + F) of the ratio C of the mass of the conductive carriers to the mass of the electrode catalyst layer and the ratio F of the mass of the fibrous substances to the mass of the electrode catalyst layer was 0.381 and such that the platinum support amount (the supported catalyst amount W) of the electrode catalyst layer was 0.5 mg/cm$^2$. The catalyst ink was applied to a polymer electrolyte membrane Nafion 212 as the base material to produce a membrane-electrode assembly. The mass ratio I/(C + F) of mass I of the fluorine-based polymer electrolyte to the total mass ratio (C + F) of the conductive carriers and the fibrous substances to the electrode catalyst layer was 0.5. In this case, the thickness D of the electrode catalyst layer was 16.0 $\mu$m.

[Example 2]

In Example 2, the membrane-electrode assembly was produced in the same manner as in the Example 1, except that the total value (C + F) of the mass ratio C of the conductive carriers and the mass ratio F of the fibrous substances is 0.464. In this case, the thickness D of the electrode catalyst layer was 19.1 $\mu$m.

[Example 3]

In Example 3, the membrane-electrode assembly was produced in the same manner as in the Example 1, except that the total value (C + F) of the mass ratio C of the conductive carriers and the mass ratio F of the fibrous substances is 0.541. In this case, the thickness D of the electrode catalyst layer was 24.6 $\mu$m.

[Example 4]

In Example 4, the membrane-electrode assembly was produced in the same manner as in the Example 1, except that the platinum support amount of the electrode catalyst layer was 0.1 mg/cm$^2$. In this case, the thickness D of the electrode catalyst layer was 3.1 $\mu$m.

[Example 5]

In Example 5, the membrane-electrode assembly was produced in the same manner as in the Example 2, except that the platinum support amount of the electrode catalyst layer was 0.1 mg/cm$^2$. In this case, the thickness D of the electrode catalyst layer was 3.5 $\mu$m.

[Example 6]

In Example 6, the membrane-electrode assembly was produced in the same manner as in the Example 3, except that the platinum support amount of the electrode catalyst layer was 0.1 mg/cm$^2$. In this case, the thickness D of the electrode catalyst layer was 6.7 $\mu$m.

[Comparative Example 1]

In Comparative Example 1, the membrane-electrode assembly was produced in the same manner as in the Example 1 except that no fibrous substance was used and the mass ratio C of the conductive carriers was 0.356. In this case, the thickness D of the electrode catalyst layer was 13.3 $\mu$m.

[Comparative Example 2]

In Comparative Example 2, the membrane-electrode assembly was produced in the same manner as in the Example 4 except that no fibrous substance was used and the mass ratio C of the conductive carriers was 0.356. In this case, the thickness D of the electrode catalyst layer was 2.6 μm.

[Comparative Example 3]

In Comparative Example 3, the membrane-electrode assembly was produced in the same manner as in the Example 1, except that the total value (C + F) of the mass ratio C of the conductive carriers and the mass ratio F of the fibrous substances is 0.598. In this case, the thickness D of the electrode catalyst layer was 51.1 μm.

(Evaluation results)

Table 1 shows the results for the examples and the comparative examples.

[Table 1]

| | Platinum support amount W [mg/cm²] | F/C | (C + F) | Thickness D (μm) | D/W [cm³/g] | D/W*(C + F) [cm³/g] | Performance [W/cm²] |
|---|---|---|---|---|---|---|---|
| Example 1 | 0.5 | 0.1 | 0.381 | 16.0 | 3.2 | 1.2 | 0.87 |
| Example 2 | 0.5 | 0.5 | 0.464 | 19.1 | 3.8 | 1.8 | 0.91 |
| Example 3 | 0.5 | 1.0 | 0.541 | 24.6 | 4.9 | 2.7 | 0.86 |
| Example 4 | 0.1 | 0.1 | 0.381 | 3.1 | 3.1 | 1.2 | 0.87 |
| Example 5 | 0.1 | 0.5 | 0.464 | 3.5 | 3.5 | 1.6 | 0.91 |
| Example 6 | 0.1 | 1.0 | 0.541 | 6.7 | 6.7 | 3.6 | 0.92 |
| Comparative Example 1 | 0.5 | 0 | 0.356 | 13.3 | 2.7 | 0.9 | 0.80 |
| Comparative Example 2 | 0.1 | 0 | 0.356 | 2.6 | 2.6 | 0.9 | 0.76 |
| Comparative Example 3 | 0.5 | 1.5 | 0.598 | 51.1 | 10.2 | 6.1 | 0.79 |

As can be seen from Table 1, using the electrode catalyst layer that includes the fibrous substances and satisfies the condition in the following equation (1) improves the power generation performance of the membrane-electrode assembly. This makes it possible to provide the electrode catalyst layer for a polymer electrolyte fuel cell having improved drainage properties and gas diffusion properties and provides high power output.

$$6.0 > (C + F) \cdot (D/W) \geq 1.0 \ [cm^3/g] \ ... \ (1)$$

[Reference Signs List]

1 Catalyst particle
2 Conductive carrier
3 Polymer electrolyte
4 Fibrous substance
5 Polymer electrolyte membrane
6 Cathode electrode catalyst layer
7 Anode electrode catalyst layer
8 Gasket material

9    Gas diffusion layer

**Claims**

1. An electrode catalyst layer for a polymer electrolyte fuel cell comprising catalyst particles, conductive carriers, fibrous substances, and a polymer electrolyte, wherein
the electrode catalyst layer is a single layer, and
the electrode catalyst layer satisfies the following equation (1) where D/W represents a ratio between a thickness D and a supported catalyst amount W of the electrode catalyst layer, C represents a ratio of mass of the conductive carriers to mass of the electrode catalyst layer, and F represents a ratio of mass of the fibrous substances to the mass of the electrode catalyst layer.

$$6.0 > (C + F) \cdot (D/W) \geq 1.0 \ [\text{cm}^3/\text{g}] \ ... \ (1)$$

2. The electrode catalyst layer according to claim 1, wherein I/(C + F) is within a range of 0.2 or more and 1.5 or less where I/(C + F) represents a ratio of a mass I of the polymer electrolyte to the mass ratio C of the conductive carriers and the mass ratio F of the fibrous substances.

3. A membrane-electrode assembly wherein the electrode catalyst layer according to claim 1 or 2 is provided on one surface of a polymer electrolyte membrane.

4. A membrane-electrode assembly, wherein the electrode catalyst layer according to claim 1 or 2 is provided on both surfaces of a polymer electrolyte membrane.

5. A method for producing the electrode catalyst layer according to claim 1 or 2, wherein additive amounts of the catalyst particles, the conductive carriers, the fibrous substances, and the polymer electrolyte are adjusted to satisfy the following equation (1) where D/W represents the ratio between the thickness D and the supported catalyst amount W of the electrode catalyst layer, C represents the ratio of mass of the conductive carriers to the mass of the electrode catalyst layer, and F represents the ratio of mass of the fibrous substances to the mass of the electrode catalyst layer.

$$6.0 > (C + F) \cdot (D/W) \geq 1.0 \ [\text{cm}^3/\text{g}] \ ... \ (1)$$

# FIG.1

FIG.2

## INTERNATIONAL SEARCH REPORT

| | International application No. |
|---|---|
| | PCT/JP2018/040136 |

A.  CLASSIFICATION OF SUBJECT MATTER

Int.Cl. H01M4/86(2006.01)i, H01M4/96(2006.01)i, H01M8/10(2016.01)i

According to International Patent Classification (IPC) or to both national classification and IPC

B.  FIELDS SEARCHED

Minimum documentation searched (classification system followed by classification symbols)
Int.Cl. H01M4/86, H01M4/96, H01M8/10

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2006-32163 A (HITACHI MAXELL, LTD.) 02 February 2006, claims, paragraph [0043] (Family: none) | 1-5 |
| X | JP 2010-146965 A (ASAHI GLASS CO., LTD.) 01 July 2010, claims, paragraphs [0047], [0086], [0089], [0094], [0107]-[0108] & US 2010/0159301 A1 claims, paragraphs [0059], [0127], [0129], [0134], [0147]-[0150] | 1-5 |
| A | JP 2006-40633 A (HITACHI CHEMICAL INDUSTRY CO., LTD.) 09 February 2006, claims, paragraph [0020] (Family: none) | 1-5 |

☐  Further documents are listed in the continuation of Box C.      ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 January 2019 (08.01.2019) | 15 January 2019 (15.01.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10241703 A
- JP 5537178 B